(19) **Europäisches Patentamt European Patent Office Office européen des brevets**

(11) **EP 4 737 769 A1**

(12) **EUROPEAN PATENT APPLICATION**

(43) Date of publication:
06.05.2026 Bulletin 2026/19

(21) Application number: 25212486.2

(22) Date of filing: 30.10.2025

(51) International Patent Classification (IPC):
*F16J 3/04* (2006.01) *B25J 19/00* (2006.01)
*F16J 15/52* (2006.01)

(52) Cooperative Patent Classification (CPC):
**F16J 3/041; B25J 19/0083; F16J 15/52;**
B64G 2004/005

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 01.11.2024 US 202463715273 P

(71) Applicant: MacDonald, Dettwiler and Associates Inc.
Brampton, Ontario L6Y 6K7 (CA)

(72) Inventors:
• **BASIC, Goran Jurisa**
Brampton, L6Y 6K7 (CA)
• **GAREL, Lucas Damien**
Brampton, L6Y 6K7 (CA)

(74) Representative: **Mewburn Ellis LLP**
**Aurora Building**
**Counterslip**
**Bristol BS1 6BX (GB)**

(54) **COLLAPSIBLE DUST OR CONTAMINANT MITIGATION SOLUTION FOR LINEAR OR AXIAL MECHANISMS**

(57) A dust mitigation device (200) for protecting mechanisms is provided. The device (200) comprises a plurality of cylindrical, concentric or nesting rings (206-1, 206-2, 206-3, 206-4) configured to correspond to the mechanism intended for protection; a multi-layered membrane (208-1, 208-2, 208-3) interconnected between said concentric or nesting rings (206-1, 206-2, 206-3, 206-4), wherein the membrane includes a composite material; and front and back flange plates (110, 112) attached to terminal junctures of the mechanism, between which the membrane (208) is tensioned; and wherein the concentric or nesting rings (206) and the multi-layered membrane (208) are arranged to enable controlled collapse and extension of the device for effective containment of contaminants.

FIG. 2A

EP 4 737 769 A1

## Description

## Technical Field

The following relates generally to dust or contaminant mitigation solutions, and more particularly to dust or contaminant mitigation solutions for linear or axial mechanisms.

## Introduction

Space exploration activities, such as in lunar environments, present a variety of unique challenges. One such challenge is the presence of dust or other contaminants or particulates that may affect the operation of linear or axial mechanisms such as axial joints. This is particularly important where the ability to clean the axial joint is impossible or impractical. Further, in many cases, such axial joints are part of robotic systems, which means that any dust or contaminant mitigation solution should be able to work in the absence of human intervention.

In planetary exploration operations, robots and robotic interfaces are exposed to a plethora of abrasive dust types which, over time, can substantially diminish the duration of mission operations and the overall lifespan of the mission. Specifically, axial mechanisms are prone to an exponential increase in dust ingress with each movement, as the geometry of the mechanism is altered during motion. For example, the surface area of an axial joint changes during actuation.

Conventional axial seals for protecting such axial joints, particularly where the seal cannot scrape against a shaft (e.g., lunar regolith, which is too abrasive and electrostatically charged for scraping), are fixed at both ends of a cavity and have a flexible body whose movement or behavior cannot be safely assumed. For example, if such a flexible body is made out of continuous soft fabric, the flexible body may become pinched in a mechanism and torn. Such a flexible body may further become caught in a translating mechanism and a range of motion thereof may be interfered with.

Accordingly, there is a need for an improved dust or contaminant mitigation solution that overcomes at least some of the disadvantages of existing approaches.

## Summary

A contaminant mitigation device for protecting a mechanism is provided. The mechanism includes first and second attachment points. The contaminant mitigation device includes a plurality of concentric or nesting components, a membrane interconnecting the plurality of concentric or nesting components, the same cross-sectional length of the membrane being provided between each adjacent pair of the plurality of concentric or nesting components, and the length or amount of the membrane being the maximum permitted distance between the adjacent pair of the plurality of concentric or nesting components in an extended configuration. From the outermost component to the innermost component, each successive concentric or nesting component has a characteristic length or diameter less than a length or diameter of the preceding concentric or nesting component according to the sum of the length or amount of the membrane therebetween and the sum of the width or cross-sectional length of each of the successive concentric or nesting component and the preceding concentric or nesting component. The length or amount of the membrane provided between each adjacent pair of the concentric or nesting components is less than or equal to the square root of the sum of the square of a vertical distance between the adjacent pair, in the extended configuration, and the square of a horizontal distance between the adjacent pair.

Each concentric or nesting component may be a ring, an oval, or a polygon.

Each concentric or nesting component may have a square cross-section.

Each concentric or nesting component may have a circular cross-section.

The length of the cross-section of each concentric or nesting component may be substantially identical.

The membrane may include a composite material.

The composite material may include a plurality of layers, each layer including one or more of BetaCloth, Kevlar™, and Multi-Layer Insulation (MLI).

The contaminant may be one or more of dust, granular material, powdered material, and particulate material.

The dust may be lunar dust.

The device may further include a first flange plate attached to the first attachment point and an outermost component of the plurality of concentric or nesting components and a second flange plate attached to the second attachment point and an innermost component of the plurality of concentric or nesting components.

A method for protecting a mechanism from contamination is provided. The mechanism includes first and second attachment points. The method includes providing a plurality of concentric or nesting components, providing a membrane interconnecting the plurality of concentric or nesting components, the same cross-sectional length of the membrane being provided between each adjacent pair of the plurality of concentric or nesting components, and the length or amount of the membrane being the maximum permitted distance between the adjacent pair of the plurality of concentric or nesting components in an extended configuration. From the outermost component to the innermost component, each successive concentric or nesting component has a characteristic length or diameter less than a length or diameter of the preceding concentric or nesting component according to the sum of the length or amount of the membrane therebetween and the sum of the width or cross-sectional length of each of the successive concentric or nesting component and the preceding concentric or nesting component. The length or amount of the membrane provided between each adjacent pair of the concentric or nesting components is less than or equal to the square root of the sum of the square of a vertical distance between the adjacent pair, in the extended configuration, and the square of a horizontal distance between the adjacent pair.

Each concentric or nesting component may be a ring, an oval, or a polygon.

Each concentric or nesting component may have a square cross-section.

Each concentric or nesting component may have a circular cross-section.

The length of the cross-section of each concentric or nesting component may be substantially identical.

The membrane may include a composite material.

The composite material may include a plurality of layers, each layer including one or more of BetaCloth, Kevlar™, and Multi-Layer Insulation (MLI).

The contaminant may be one or more of dust, granular material, powdered material, and particulate material.

The dust may be lunar dust.

The method may further include providing a first flange plate attached to the first attachment point and an outermost component of the plurality of concentric or nesting components and providing a second flange plate attached to the second attachment point and an innermost component of the plurality of concentric or nesting components.

Other aspects and features will become apparent, to those ordinarily skilled in the art, upon review of the following description of some exemplary embodiments.

## Brief Description of the Drawings

The drawings included herewith are for illustrating various examples of articles, methods, and apparatuses of the present specification. In the drawings:

Figure 1 is a cross-sectional diagram of a collapsible device for dust mitigation in extended and collapsed configurations, according to an embodiment;

Figure 2A is a schematic cross-sectional view of a collapsible device for dust mitigation, such as the collapsible device of Figure 1, in an extended configuration, according to an embodiment;

Figure 2B is a schematic cross-sectional view of the collapsible device for dust mitigation of Figure 2A in a collapsed configuration;

Figure 3 is a schematic diagram of an anti-overlap system of the collapsible device for dust mitigation of Figures 2A-2B, according to an embodiment;

Figure 4 is a cross-section perspective view of a collapsible device for dust mitigation in an extended configuration installed on an axial mechanism, according to an embodiment;

Figure 5 is a flowchart of a method for assembling a collapsible contaminant mitigation solution, according to an embodiment; and

Figure 6 is a flowchart of a method for protecting a mechanism from contamination, according to an embodiment.

## Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

While the above description provides examples of one or more apparatus, methods, or systems, it will be appreciated that other apparatus, methods, or systems may be within the scope of the claims as interpreted by one of skill in the art.

The following relates generally to a space environment contamination control system, and more particularly to a collapsible and adaptable dust mitigation device for linear or axial mechanisms, including axial joints, in extraterrestrial applications. The following also relates generally to dust or contaminant mitigation solutions, and more particularly to dust or contaminant mitigation solutions for axial joints.

The contaminant may be one or more of dust, granular material, powdered material, and particulate material.

According to an embodiment, a compact, collapsible dust mitigation device designed for axial joints is provided. The device may be used in space environments. The device includes interconnected rings made of metal or plastic. A dust-resistant material, made from durable materials such as BetaCloth, Kevlar™, and Multi-Layer Insulation, connects the rings. The flexible and durable materials are substantially non-porous and effectively protect against ingress of contaminants through the material into the axial joints. The flexible and durable materials are further sufficiently flexible to fold and roll such that a shape of the dust-resistant material adjusts with the motion of the interconnected rings.

The adaptability of the device in size and shape allows for a wide range of applications. The device may further include an electro-dynamic shield and charged layers to further mitigate lunar regolith and manage static.

According to an embodiment, a collapsible dust mitigation device is provided. The device includes a plurality of concentric structural components and a dust-resistant material. The concentric structural components are preferably rings, each with constant and identical cross sections, wherein each successive concentric structural component fits within or around an adjacent one. The dust-resistant material is preferably a single piece and even more preferably multi-layer insulation (MLI) provided as the single piece. The dust-resistant material is connected at or to each concentric structural component (with the same amount of the material for each structural component) in a specific configuration to guide and constrain the concentric structural components to collapse and extend in a controlled manner, thereby preventing an "overlap" condition as defined hereinbelow. The concentric structural components form a rigid structure. In use, opposing ends of the device are configured to attach to termination points of the mechanism being protected such that, when the termination points move apart or together in response to mechanism action, the device extends and collapses, respectively.

When the rings are in a collapsed or contracted position, the rings form a "horizontal" line with the material or fabric disposed therebetween (extending from one cross-section to the next as the hypotenuse of a triangle defined by a "vertical" distance between successive cross-sections and a "horizontal" distance between successive cross-sections).

When the rings are in an extended position, the rings form a bellows or funnel shape, and the dust-resistant material defines a maximum distance between successive concentric rings to avoid the overlap condition.

The foregoing features prevent the overlap condition with respect to successive concentric components (rings) by providing a maximum amount of fabric for each component according to a maximum permitted distance that a structural component may travel, relative to adjacent structural component(s). Distances and dimensions in the present disclosure may all be defined relative to an arbitrary distance $\Delta R$ (an independent or selectable variable representing the horizontal distance between successive concentric components in the expanded position discussed hereinabove, as well as in the contracted position). Accordingly, the foregoing disclosure may perform to protect the mechanism and be suitable for any value of $\Delta R$, as all other dimensions are relative thereto (e.g., being suitable for small end effectors, for large reflectors, and for anything in between).

$2\Delta R$ (the length of the hypotenuse discussed hereinabove) is the maximum permitted distance between successive concentric components in the extended position, and so $2\Delta R$ is the maximum length or amount of fabric (e.g., of the MLI) provided for each component relative to adjacent concentric components. The inequality:

$$2\Delta R \leq \sqrt{\Delta R^2 + L^2}$$

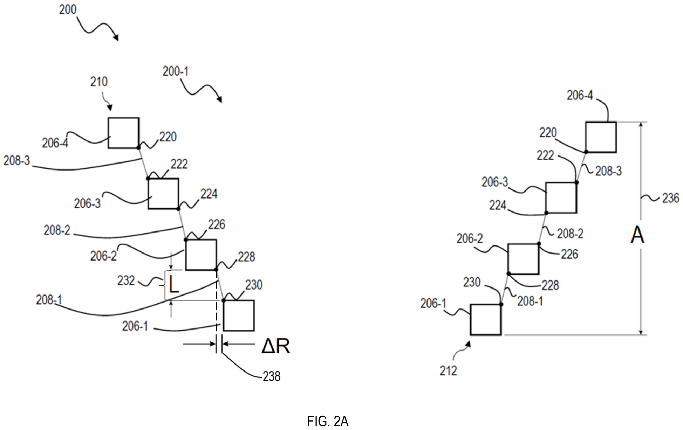

is obeyed, where L is a local length 232 representing the maximum permissible vertical distance between any two adjacent concentric components as further discussed in respect of Figure 2A.

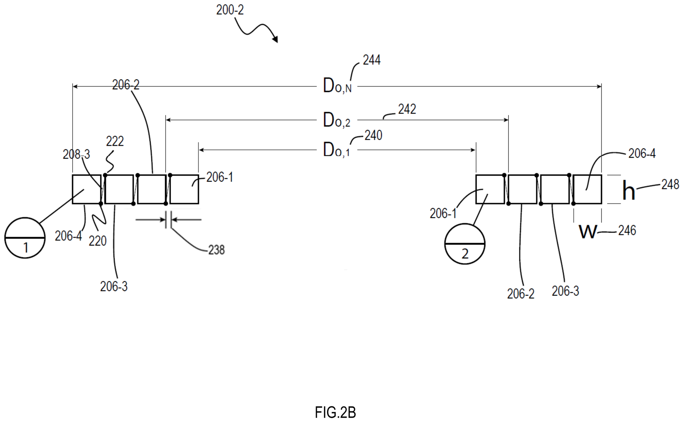

Each successive concentric component has a diameter approximately $2\Delta R + 2*w$ ("w" shown as the width 246 of a concentric component in Figure 2B) less than the diameter of the preceding concentric ring. The $2\Delta R$ term is provided so that each component is able to move $1\Delta R$ in any direction, by definition, meaning the concentric component has space of $2\Delta R$ to move ($1\Delta R$ in a first direction and $1\Delta R$ in an opposite second direction, which add to $2\Delta R$). The $2*w$ term is provided so that, even when fully moved $1\Delta R$ in any direction, no part of the successive component (e.g., the cross-sectional 'rim' of the successive ring) overlaps with any part of the preceding component (e.g., the cross-sectional rim (width w) of the preceding ring).

The foregoing provides for a seamless and controlled collapse or extension of the device in sync with the axial movements of the mechanism.

The foregoing further provides a reliable and adaptable solution for dust mitigation, operating in environments with high levels of contaminants.

Although the present disclosure discusses dust as a contaminant and describes how the present disclosure may be applied to prevent the ingress of dust (e.g., lunar regolith), it will be appreciated by one of skill in the art that the present disclosure may be applied to prevent the ingress of many other contaminants, including but not limited to other fluids or other media.

Further applications of the present disclosure relate to milling machine centers or vehicle suspension, where there are translating stages that see metal debris and liquid coolant in large quantities. The present disclosure may advantageously offer protection in a collapsing, repeatable form factor.

The following disclosure further relates to a contaminant mitigation device for protecting a mechanism, the mechanism including first and second attachment points. In an embodiment, the device includes a plurality of concentric or nesting components successively arranged such that an outer one or more of the plurality of concentric or nesting components is successively outer an innermost concentric or nesting component and such that an inner one or more of the plurality of concentric or nesting components is successively inner an outermost concentric or nesting component. In the embodiment, the device further includes a membrane interconnecting the plurality of concentric or nesting components. In the embodiment, the same length or amount of the membrane is provided between each adjacent pair of the concentric or nesting components, and the length or amount of the membrane is the maximum permitted distance between the adjacent pair of the concentric or nesting components. In the embodiment, each successive concentric or nesting component has a characteristic length or diameter less than a length or diameter of the preceding concentric or nesting component according to the sum of the length or amount of the membrane therebetween and the sum of the width or cross-sectional length of each of the successive concentric or nesting component and the preceding concentric or nesting component. In the embodiment, the length or amount of the membrane provided between each adjacent pair of the concentric or nesting components is less than or equal to the square root of the sum of the square of a vertical distance between the adjacent pair, in the extended configuration, and the square of a horizontal distance between the adjacent pair.

While examples described herein may refer to components that are concentric with another, in some embodiments, the components may be configured to nest relative to one another (i.e., "nesting").

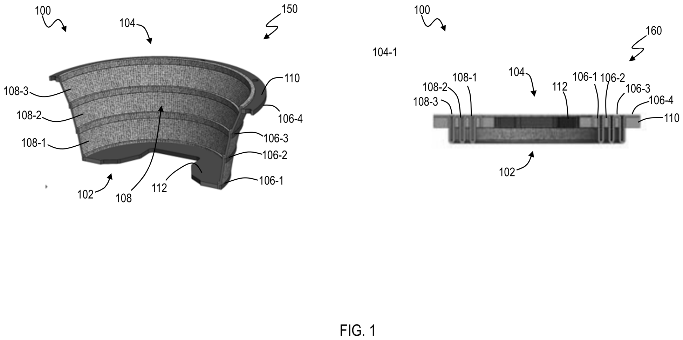

Referring now to Figure 1, shown therein is a collapsible device 100 for dust mitigation in a fully extended configuration 150 and a fully collapsed configuration 160, according to an embodiment.

The device 100 is a stacked and contractable dust mitigation device suitable for use in extraterrestrial environments that may subject a mechanism (not shown) to contaminants, such as the lunar surface that may expose a mechanism to lunar dust.

The contaminant may be one or more of dust, granular material, powdered material, and particulate material.

The device 100 may reduce or prevent ingress of lunar regolith into the mechanism.

The mechanism may include axial joints or mechanisms with a long axial motion enabling linear movement or extension.

In use, opposing ends of the device 100 are configured to attach to termination points of the mechanism being protected, as will be further discussed hereinbelow.

The device 100 includes a first end 102 and a second end 104. When in use on an axial joint, the first end 102 is fixed and the second end 104 is movable in the axial direction (i.e., along the translation of the axial joint in either direction). The first end 102 may also be referred to as the fixed end 102 or the stationary end 102. The second end 104 may also be referred to as the moving end 104 or the translating end 104. The first and second ends 102, 104 may be considered terminal ends of the mechanism.

The device 100 includes a plurality of cylindrical, concentric rings 106-1, 106-2, 106-3, 106-4. The rings 106-1, 106-2, 106-3, 106-4 may be referred to collectively as the rings 106 and generically as the ring 106. It will be appreciated that the plurality of cylindrical, concentric rings 106 may include any number of the rings 106, and four such rings 106 are shown in Figure 1 for convenience of illustration. The rings 106 may also be referred to as concentric structural components of the device 100. The rings 106 are concentrically arranged relative to one another.

The rings 106 may be configured to nest relative to one another ("nested" or "nesting").

In an embodiment, the rings 106 are square-shaped (i.e., having a square cross-section). Square rings 106 may advantageously provide defined corners for affixing a membrane 108 thereto.

In an embodiment, the rings 106 are circularly shaped (i.e., having a circular cross-section).

The sizes of the rings 106 progressively decrease from the second end 104 to the first end 102, allowing the rings 106 to overlap and fully collapse for efficient space utilization and contaminant containment as shown in the fully collapsed configuration 160. This shape is particularly chosen for ease of integration around axial joints and mechanisms. However, the design is versatile and may be adapted to include other shapes, such as oval or polygonal configurations, to suit different types of mechanisms or space constraints. This flexibility in shape design with respect to the rings 106, particularly the cross-sections thereof, enhances the applicability of the device 100 across various space exploration systems and mechanisms, providing a tailored approach to dust and contaminant mitigation in challenging extraterrestrial environments.

In an embodiment, the rings 106 are formed through additive manufacturing, e.g., 3D printing.

The device 100 further includes the membrane 108 for interconnecting the rings 106 in both the fully extended configuration 150 and the fully collapsed configuration 160.

The membrane 108 connects with each ring 106 at all times while the device 100 is in use.

The membrane 108 includes membrane segments 108-1, 108-2, 108-3 respectively disposed between pairs of adjacent rings 106 (e.g., the membrane segment 108-1 is disposed between the rings 106-1 and 106-2) and respectively defining a portion of the membrane 108 therebetween.

The rings 106 provide a supporting framework for the membrane 108. The rings 106 may advantageously prevent undesirable overlap of the membrane 108 by providing structural integrity thereto.

In an embodiment, the membrane 108 is securely tensioned between the ring 106-1 and ring 106-4 (terminal rings).

The material of the membrane 108 is selected to prevent ingress of dust particles (e.g., lunar regolith). The material of the membrane 108 may be particularly chosen for durability and resilience. Preferred materials include BetaCloth, Kevlar, and Multi-Layer Insulation (MLI). In an embodiment, the membrane 108 is or includes a composite material. The composite material may be designed to meet the stringent requirements of durability and functional longevity highly desirable for space applications.

In an embodiment, the material of the membrane 108 has a layered composition including a plurality of layers. The plurality of layers may include at least two different materials. In an embodiment, the layered composition includes a first layer of BetaCloth, a second layer of MLI, a third layer of Kevlar aramid, and a fourth layer of BetaCloth. In an embodiment, the layers have a varying weave density. The layering composition may advantageously allow for integration of a charged or dissipative layer to manage static and other charges. Further, the layers may provide an electro-dynamic shield (EDS) for actively removing lunar regolith.

The device 100 includes a first flange plate 110 connected to the ring 106-4. In an embodiment, the flange plate 110 is integrally formed with the ring 106-4. The flange plate 110 may be used to attach the ring 106-4, and the device 100 more generally, to the axial joint or mechanism being protected by the device 100. The flange plate 110 is attached to a translating component of the axial joint such that as the axial joint translates (in either direction), the ring 106-4 moves with the translating component in the same direction. Generally, the flange plate 110 is connected to the ring 106 closest to the second end 104 of the device 100.

The device 100 includes a second flange plate 112 connected to the ring 106-1. In an embodiment, the flange plate 112 is integrally formed with the ring 106-1. The flange plate 112 may be used to attach the ring 106-1, and the device 100 more generally, to the axial joint or mechanism protected by the device 100. The flange plate 112 is attached to a non-translating or fixed component of the axial joint such that the as the axial joint translates (in either direction), the ring 106-1, and the end 102, remain fixed as the second end 104 translates with the joint translation. Generally, the flange plate 112 is connected to the ring 106 closest to the first end 102 of the device 100.

The flange plates 110, 112 may be formed through additive manufacturing (e.g., 3D printing).

The foregoing functionality allows the device 100 to adapt its form, between the fully extended configuration 150 and the fully collapsed configuration 160, in response to mechanical adjustments of the axial mechanism. As a result, the device 100 provides contaminant management across various configurations of the axial mechanism.

The device 100 is designed to extend and collapse in synchronization with the axial mechanism, which operates through linear movement or lengthening. The foregoing functionality is achieved through a triggered reduction in the distance between the terminal points of the device 100 at the axial mechanism, which causes a contraction of the device 100 (e.g., by moving or translating the axial joint). As the axial mechanism operates, the distance between the terminal points varies. When this distance increases, the device 100 extends, with the ring 106-1 and ring 106-4 moving apart, causing the device 100 to achieve the fully extended configuration 150. Conversely, when the axial mechanism contracts and the distance between the terminal points decreases, the device 100 collapses, bringing the ring 106-4 and ring 106-1 closer together, causing the device 100 to achieve the fully collapsed configuration 160. This dynamic adjustment of the device 100 provides effective contaminant management while accommodating the mechanical movements of the axial mechanism.

The device 100 is designed to address the vulnerability of axial mechanisms by enabling controlled collapse and extension as the axial mechanism translates.

Referring now to Figures 2A and 2B, shown therein is a schematic diagram of a collapsible device 200 for dust mitigation in an extended configuration 200-1 (Figure 2A) and collapsed configuration 200-2 (Figure 2B), according to an embodiment.

The collapsible device 200 may be the device 100 of Figure 1.

In Figures 2A and 2B, like numerals denote like references with respect to Figure 1.

Although Figures 2A and 2B are provided as schematic diagrams of the collapsible device 200, it will be appreciated that Figures 2A and 2B may further be considered as cross-sectional diagrams of the collapsible device 200, with the rings 206 having a square cross-section. In other embodiments, the rings 206 may have different cross-sections of any suitable shape (e.g., circular cross-sections).

The device 200 further includes attachment points 220, 222 at which the membrane portion 208-3 is attached to the rings 206-4 and 206-3, respectively; attachment points 224, 226 at which the membrane portion 208-2 is attached to the rings 206-3 and 206-2, respectively; and attachment points 228, 230 at which the membrane portion 208-1 is attached to the rings 206-2 and 206-1, respectively.

It will be appreciated that each of the attachment points 220, 222, 224, 226, 228, and 230 is itself a ring atop or below a respective ring 206, and each labelled instance of one of the attachment points 220, 222, 224, 226, 228, and 230 represents the same attachment point (e.g., the leftmost attachment point 220 and the rightmost attachment point 220 represent the same attachment point 220). Because a cross-section of the device 100 is shown such that each ring 206 appears as a square cross-section and each membrane portion 208 appears as a linear cross-section, therefore each of the attachment points 220, 222, 224, 226, 228, and 230 appears as a point in cross-section.

The rings 206 are interconnected in a specific configuration based on the intended mechanism (not shown) to be protected by the membrane 208. The terminal rings, in Figures 2A-2B the rings 206-4 and 206-1, are connected to the mechanism with the first flange plate 210 and second flange plate 212, respectively.

The membrane 208 acts as a flexible barrier and sealant between the rings 206. The membrane 208 is preferably affixed to each ring 206 by an adhesive suitable for space conditions or by a mechanical fastener that ensures a durable bond while allowing for movement during device operation. The membrane 208 provides a flexible link that can expand or contract as the device 200 moves. The adhesive or mechanical fastener is selected to permit the membrane 208 to fold neatly upon itself without damage or displacement when the device 200 is in the collapsed state 200-2, thereby to allow for the transfer of movement between the rings 206 while preventing the ingress of contaminants.

In the extended configuration 200-1, a local length 232 (shown as L in Figure 2A) represents the maximum permissible length between any two adjacent rings 206, or between a ring 206 and a flange plate 210, 212. The local length 232 may be determined by the specific requirements of the axial mechanism that the device 200 is designed to protect or to facilitate better movement and functionality of the device 200. In an embodiment, the local length 232 is constant across each pair of adjacent rings 206, i.e., each ring 206 is subject to the local length 232 with respect to each other ring 206 adjacent thereto. The local length 232 is less than or equal to $2\Delta R$ as discussed hereinabove.

The global length 236 (also indicated as A in Figure 2A) indicates the maximum length to which the device 200 is configured to extend. The global length 236 indicates the total expanded length from one flange plate 210 to the other flange plate 212 when the device 200 is in the extended configuration 200-1. The global length 236 may determine the overall operating range of the device 200. The global length 236 may be determined by the mechanism.

In the collapsed state 200-2, as shown in Figure 2B, the membrane portions 208 are shown in a folded configuration, having been stacked or pleated as the device 200 compresses. This folding is preferably designed to minimize wear and ensure that the integrity of the seal is maintained over multiple expansions and contractions.

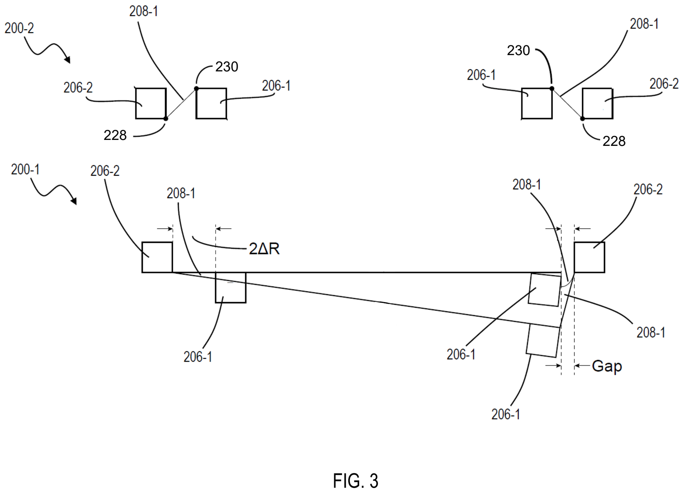

The rings 206 and the membrane 208 are configured to prevent an "overlap condition" as shown in Figure 3 when the device 200 moves between the configurations 200-1, 200-2.

When the rings 206 are in a collapsed or contracted position, as in Figure 2B, the rings form a "horizontal" line with a respective membrane portion 208 disposed therebetween (shown in Figure 2B as a line extending from one cross-section of a ring 206 to the next as the hypotenuse of a triangle defined by a side length of one cross-section 206 and a horizontal distance between successive cross-sections, i.e., the width 238). In the interest of clarity, only the membrane portion 208-3 and the attachment points 220, 222 thereof are specifically labelled and discussed with respect to Figure 2B, but it will be understood that this discussion pertains to each membrane portion 208 between each pair of adjacent rings 206. Distances and dimensions in the disclosure may all be defined relative to an arbitrary distance $\Delta R$ (an independent or selectable variable representing the horizontal distance between successive concentric rings in the extended position discussed hereinabove as shown in Figure 2A). Accordingly, the foregoing disclosure may perform to protect the mechanism and be suitable for any value of $\Delta R$, as all other dimensions are relative thereto (e.g., being suitable for small end effectors, for large reflectors, and for anything in between). $2\Delta R$ is the length of the hypotenuse discussed hereinabove (i.e., the length of the membrane 208-3) and is the maximum permitted distance between successive concentric rings in the extended configuration 200-1. The inequality $2\Delta R <= sqrt(\Delta R^2 + L^2)$ is obeyed.

In the embodiment where the cross-section of the rings 206 is square, each successive concentric ring 206 has a diameter approximately $2\Delta R + 2*w$ less than the diameter of the preceding concentric ring 206 (where the variable 'w' refers to the width 246, which is the width of the cross-section of each successive ring 206 (e.g., each ring 206 is a square with sides whose length is the width 246)). The $2\Delta R$ term in the foregoing is provided so that each ring 206 is able to move $1\Delta R$ in any direction, by definition, meaning the ring 206 has space of $2\Delta R$ to move ($1\Delta R$ in a first direction and $1\Delta R$ in an opposite second direction, which add to $2\Delta R$). The $2*w$ term is provided so that, even when fully moved $1\Delta R$ in any direction, no part of the cross-sectional rim of the successive ring 206 overlaps with the cross-sectional rim (width 246) of the preceding ring 206.

The horizontal distance 238 (which is the term $\Delta R$ as used in equations herein) represents the minimum spacing or the closest proximity between any two adjacent rings 206 or between a ring 206 and a flange plate 210, 212 when the device 200 is in its most extended state 200-1. In an embodiment, the horizontal distance 238 is the same in both the extended configuration 200-1 and the collapsed configuration 200-2. In an embodiment, the horizontal distance 238 is set by ensuring that the device 200 does not bind or interfere with the axial mechanism's operation. The horizontal distance 238 is the third side of the triangle defined by the respective membrane 208 and the local length 232.

The horizontal distance 238 is the same in Figures 2A and 2B (i.e., equal to $\Delta R$) for the purposes of calculating equations. The horizontal distance 238 may be the same across the configurations 200-1, 200-2. However, it will be appreciated by one of skill in the art that the horizontal distance 238 may vary slightly across the configurations 200-1, 200-2. Accordingly, in an embodiment, the horizontal distance 238 is constant across the configurations 200-1, 200-2. Accordingly, in a further embodiment, the horizontal distance 238 varies slightly across the configurations 200-1, 200-2.

The distance 240 is the span across the innermost edges of the first flange plate 212. The distance 240 defines the opening width of the flange plate 212. The distance 240 relates to the outermost diameter of the ring 206-1 by virtue of providing the minimum outer diameter to accommodate the opening width. The distance 240 is set to align the first terminal point of the device 200 to the mechanism to which the device 200 is affixed.

The distance 242 indicates the intermediate distance, specifically the inner diameter of the ring 206-2.

The distance 244 indicates the diameter or distance across the second flange plate 210. The distance 244 determines the size of the device 200 and ensures compatibility with the axial mechanism at the second terminal point of the device 200.

In an embodiment, the membrane portions 208-1, 208-2, 208-3, 208-4 are made from the same material.

In an embodiment, the membrane portions 208-1, 208-2, 208-3, 208-4 are made from different materials.

The membrane 208 is securely tensioned between the flange plates 210, 212 and affixed to the terminal points of the mechanism (not shown). The flange plates 210, 212 are driven by the mechanism (not shown).

The rings 206 may be any suitable shape. In an embodiment, the rings 206 are rectangular or square in cross-section. Such shapes may provide simple and sharp corners to exercise the shield fabric 208. In another embodiment, the rings 206 are circular. A variety of shapes may be used to increase functionality.

In an embodiment, the rings are provided to allow the use of a thin fabric for the membrane 208 without the risk of other parts damaging the fabric.

Referring now to Figure 3, shown therein is a schematic diagram of the device 200 in the extended configuration 200-1 and the collapsed configuration 200-2. In Figure 3, it is demonstrated how an overlap condition is prevented in the device 200 according to the present disclosure. It may be considered that the configuration 200-1 is in fact a partially extended configuration rather than a fully extended configuration, as in Figure 2A.

An "overlap condition" occurs where a lower ring 206 (considering the flange plate 210 to be above the flange plate 212) would travel past an upper ring 206 in the horizontal direction such that an edge of the lower ring 206 closest to the upper ring 206 has travelled past an edge of the upper ring 206 closest to the lower ring 206. Accordingly, the overlap condition may be considered to occur where a vertical line perpendicular to and passing through the cross-section of any ring 206 passes through the cross-section of any other ring 206.

It is desirable to avoid the overlap condition because such overlapping may interfere with the extension and/or collapse of the rings 206 (e.g., in the device 100 moving between the fully extended configuration 150 and the fully collapsed configuration 160 and vice-versa).

The foregoing problem is solved in the present disclosure in preventing the overlap condition by providing a maximum amount of the membrane 208 between successive rings 206 such that the cross-section of the membrane 208 (e.g., as shown in Figure 3) is equal in length to twice $\Delta R$, which as previously discussed represents the horizontal distance between successive rings 206 in the fully extended configuration 150 and/or in the fully collapsed configuration 160.

As is shown in Figure 3 in the configuration 200-1, the ring 206-1 is spaced no more than twice $\Delta R$ apart from the ring 206-2 (i.e., the membrane portion 208-1 has a length no greater than twice $\Delta R$). As each pair of identically labelled cross-sections of the rings 206 in the Figures corresponds to the same ring 206, it will be understood that the cross-section of the ring 206-1 is shown as connected to the cross-section of the ring 206-2 in two places by the membrane portion 208-1. Accordingly, because the membrane portion 208-1 is no longer than twice $\Delta R$, each cross-section 206-1 is able to move no more than $\Delta R$ towards the cross-section 206-2 (e.g., if the leftmost cross-section 206-1 were to move more than $\Delta R$ towards the leftmost cross-section 206-2, the rightmost membrane portion 208-1 would physically prevent such movement, as it would be fully extended at length twice $\Delta R$ before the overlap condition occurred with respect to the leftmost cross-sections 206-1, 206-2).

It is to be understood that the device 200 is represented in Figure 3 (and elsewhere in the Figures) as a series of cross-sections owing to the two-dimensional limitation of the Figures. However, in actuality the device 200 is fully three-dimensional, and each ring 206 and membrane portion 208 may take the form of a circle, disc, cylinder, or other three-dimensional shape such that a single ring 206-1 connects to a single ring 206-2, such connection being provided by a single membrane portion 208-1. The foregoing discussion of the cross-sections 206-1, 206-2, 208-1 nevertheless applies to any pair of opposing points along the rings 206-1, 206-2 and the membrane portion 208-1, respectively.

In the interest of clarity, the foregoing detailed discussion of the interaction of the rings 206 and the membrane 208 is provided only with respect to the pair of rings 206-1, 206-2 and the membrane portion 208-1. However, it is to be understood that the foregoing applies to each successive pair of rings 206 and each membrane portion 208 therebetween.

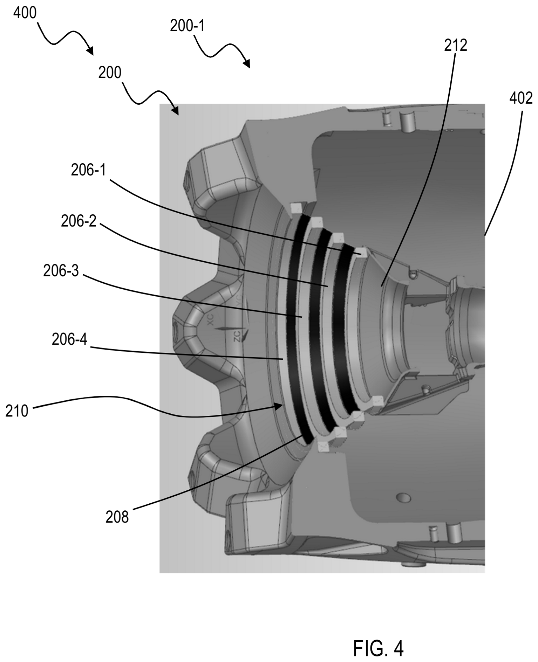

Referring now to Figure 4, shown therein is a cross-sectional view of an anti-overlap system 400 provided by the collapsible device 200 of Figures 2A-3 in the extended configuration 200-1, according to an embodiment.

Figure 4 shows a cross-sectional view of the collapsible dust mitigation device 200 deployed on an axial mechanism 402.

The flange plates 210, 212 are provided for anchoring the device 200 to the axial mechanism 402 and for enhancing structural stability.

The flange plates 210, 212 act as guides for the extension of the membrane 208. Each membrane portion 208 is securely tensioned, in the extended configuration 200-1, between the flange plates 210, 212 and attached to each ring 206. The flange plates 210, 212 are attached to first and second ends of the mechanism at first and second mechanism attachment points (not shown), respectively. The first and second ends may be terminal ends of the mechanism. Each membrane portion 208 may be securely tensioned in the collapsed configuration 200-2.

The device 200 operates in conjunction with the axial mechanism 402 that the device 200 is configured to protect, exhibiting linear movement or extension. Upon actuation of the axial mechanism 402 resulting in an increased separation between the attachment points, the device 200 correspondingly elongates, caused by the divergence of its two extremities of the axial mechanism (e.g., in the fully extended configuration 150). Upon actuation of the axial mechanism 402 resulting in a decreased separation between the attachment points, a contraction of the device 200 is caused, characterized by the convergence of its respective extremities. This functional design allows the device 200 to adapt its form in response to the mechanical adjustments of the axial mechanism 402 (e.g., to enter the fully collapsed configuration 160). As a result, the device 200 provides contaminant management across various configurations of the axial mechanism 402 within the system 400.

The rings 206 provide the necessary structural support to facilitate repeatable and seamless folding and unfolding of the device 200.

In the embodiment shown in Figure 4, the rings 206 of the device 100 are primarily cylindrical and concentric, allowing for efficient collapsibility and extension. The sizes of the rings 206 progressively decrease from the ring 206-4 to the ring 206-1, allowing the rings 206 to avoid the overlap condition discussed hereinabove and fully collapse for efficient space utilization and contaminant containment. This shape is particularly chosen for its ease of integration around axial joints and mechanisms. However, the design is versatile and may potentially be adapted to include other shapes, such as oval or polygonal configurations, to suit different types of mechanisms or space constraints. This flexibility in shape design enhances the applicability of the device 200 across various space exploration systems and mechanisms, providing a tailored approach to dust and contaminant mitigation in challenging extraterrestrial environments.

The material of the membrane 208 is provided to prevent ingress of dust particles and regolith. The materials are chosen for their durability and resilience. The materials include BetaCloth, Kevlar, and Multi-Layer Insulation (MLI), thereby enabling effective containment of the contaminants. In an embodiment, the membrane 208 is composed of a composite material. The composite material may be designed to provide the durability and functional longevity preferable for space applications.

In an embodiment, the shield fabric or the material of the membrane 208 has a layered composition including a plurality of layers. The plurality of layers may include at least two different materials. In an embodiment, the layered composition includes a first layer of BetaCloth, a second layer of MLI, a third layer of Kevlar aramid, and a fourth layer of BetaCloth. In an embodiment, the layers have a varying weave density.

The layering composition with support rings and material selection provides an integration of a charged or dissipative layer to manage static and other charges in the membrane 208. Further, the layers may provide an electro-dynamic shield (EDS) for actively removing lunar regolith from the mechanism 402.

In an embodiment, the device 400 or its components such as the rings 206 or the flange plates 210 and 212 are 3D-printed to match specific requirements of the mechanism 402. Advantageously, precise customization according to the unique dimensions and operational needs of the mechanism 402 is provided. As a result, an optimal fit and effective functionality of the dust mitigation device 200 in space environments may be achieved. The scalability and adaptability of the device 200 allow for customization in terms of characteristic length or diameter, making the device 200 suitable for a wide range of applications.

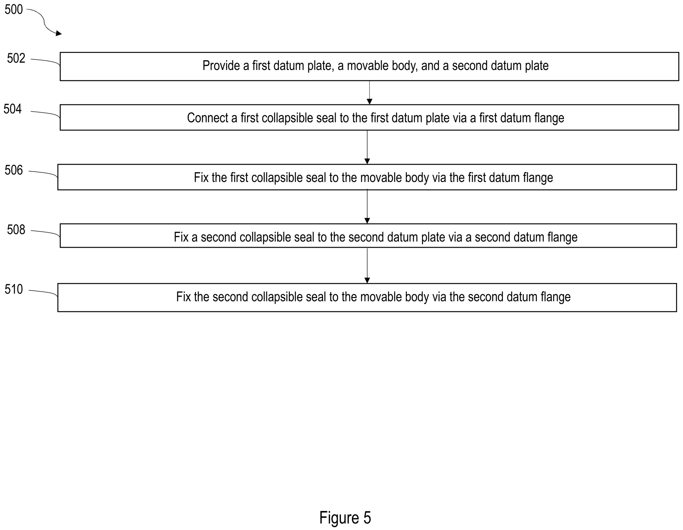

Referring now to Figure 5, shown therein is a flowchart of a method 500 for assembling a collapsible contaminant mitigation solution, according to an embodiment. The collapsible contaminant mitigation solution may be the device 100 of Figure 1 or the device 200 of Figures 2A, 2B, and 3. The collapsible contaminant mitigation solution of the method 500 may be suitable for preventing the ingress of dust, e.g., lunar regolith.

At 502, the method 500 includes providing a first datum plate, a movable body, and a second datum plate.

At 504, the method 500 includes connecting a first collapsible seal to the first datum plate via a first datum flange.

At 506, the method 500 further includes fixing the first collapsible seal to the movable body via the first datum flange.

At 508, the method 500 further includes fixing a second collapsible seal to the second datum plate via a second datum flange.

At 510, the method 500 further includes fixing the second collapsible seal to the movable body via the second datum flange.

Advantageously, the movable body is free to move towards the first collapsible seal or the second collapsible seal while sealing between the first collapsible seal and the movable body, and between the second collapsible seal and the movable body, is maintained, thereby preventing any ingress of contaminants. Advantageously, in this configuration, each collapsible seal and the movable body may move independently relative to the other collapsible seal. Sealing efficacy is achieved in series.

The datum plates may be the flange plates 210, 212 of Figure 2. The relationship between overall axial extended length (A) 236 of the solution discussed above between the flange plates 210, 212 and the local extended length (L) 232 between the rings 206 is provided as follows: (a) $A = Nh + (N-1)L$; (b) $D_{o,N} = N_w + (N-1)_{\Delta R}$. It is expressly contemplated that L may not be equal to h, i.e., the local length 232 may not be equal to the height (shown in Figure 2B as height or 'h' 248).

Because motion of the rings 206 is purely axial (e.g., the axial motion shown in Figure 3 in respect of the ring 206-2, 206-1), the foregoing arrangement passes the anti-overlap condition.

If the first and second datum flanges are moving purely axially, but the collapsible seal rings are unrestrained, the datum flanges may stray radially. As shown, this will not result in an overlap condition failure no matter the position of the adjacent ring. Therefore as a system, all rings will ensure no overlap.

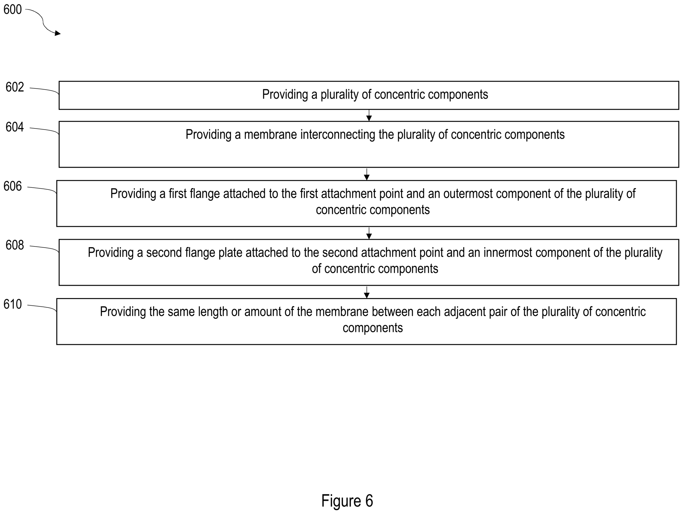

Referring now to Figure 6, shown therein is a flowchart of a method 600 for protecting a mechanism from contamination, according to an embodiment. The mechanism includes first and second attachment points.

At 602, the method 600 includes providing a plurality of concentric components.

At 604, the method 600 includes providing a membrane interconnecting the plurality of concentric components.

At 606, the method 600 includes providing a first flange plate attached to the first attachment point and an outermost component of the plurality of concentric components.

At 608, the method 600 includes providing a second flange plate attached to the second attachment point and an innermost component of the plurality of concentric components.

At 610, the method 600 includes providing the same length or amount of the membrane between each adjacent pair of the plurality of concentric components. The length or amount of the membrane is the maximum permitted distance between each adjacent pair of the plurality of concentric components.

In the method 600, from the outermost component to the innermost component, each successive concentric component has a characteristic length or diameter less than a length or diameter of the preceding concentric component according to the sum of the length or amount of the membrane therebetween and the sum of the width or cross-sectional length of each of the successive concentric component and the preceding concentric component.

In the method 600, the length or amount of the membrane provided between each adjacent pair of the concentric components is less than or equal to the square root of the sum of the square of a vertical distance between the adjacent pair, in the extended configuration, and the square of a horizontal distance between the adjacent pair.

## Claims

1. A contaminant mitigation device for protecting a mechanism, the mechanism comprising first and second attachment points, the contaminant mitigation device comprising:

   a plurality of concentric or nesting components;
   a membrane interconnecting the plurality of concentric or nesting components;
   wherein the same cross-sectional length of the membrane is provided between each adjacent pair of the plurality of concentric or nesting components, and wherein the length or amount of the membrane is the maximum permitted distance between the adjacent pair of the plurality of concentric or nesting components in an extended configuration;
   wherein from an outermost concentric or nesting component to an innermost concentric or nesting component each successive concentric or nesting component has a characteristic length or diameter less than a length or diameter of the preceding concentric or nesting component according to the sum of the length or amount of the membrane therebetween and the sum of the width or cross-sectional length of each of the successive concentric or nesting component and the preceding concentric or nesting component; and
   wherein the length or amount of the membrane provided between each adjacent pair of the concentric or nesting components is less than or equal to the square root of the sum of the square of a vertical distance between the adjacent pair, in the extended configuration, and the square of a horizontal distance between the adjacent pair.

2. The device of claim 1, wherein each concentric or nesting component is a ring, an oval, or a polygon.

3. The device of claim 1, wherein each concentric or nesting component has a square or circular cross-section, and wherein the length of the cross-section of each concentric or nesting component is substantially identical.

4. The device of claim 1, wherein the membrane includes a composite material.

5. The device of claim 4, wherein the composite material includes a plurality of layers, each layer including one or more of BetaCloth, Kevlar™, and Multi-Layer Insulation (MLI).

6. The device of claim 1, wherein the contaminant is one or more of dust, granular material, powdered material, and particulate material.

7. The device of claim 6, wherein the dust is lunar dust.

8. The device of claim 1 further comprising a first flange plate attached to the first attachment point and the outermost component of the plurality of concentric or nesting components and a second flange plate attached to the second attachment point and the innermost component of the plurality of concentric or nesting components.

9. A method for protecting a mechanism from contamination, the mechanism comprising first and second attachment points, the method comprising:

  providing a plurality of concentric or nesting components;
  providing a membrane interconnecting the plurality of concentric or nesting components;
  wherein the same cross-sectional length of the membrane is provided between each adjacent pair of the plurality of concentric or nesting components, and wherein the length or amount of the membrane is the maximum permitted distance between the adjacent pair of the plurality of concentric or nesting components in an extended configuration;
  wherein from an outermost concentric or nesting component to an innermost concentric or nesting component each successive concentric or nesting component has a characteristic length or diameter less than a length or diameter of the preceding concentric or nesting component according to the sum of the length or amount of the membrane therebetween and the sum of the width or cross-sectional length of each of the successive concentric or nesting component and the preceding concentric or nesting component; and

wherein the length or amount of the membrane provided between each adjacent pair of the concentric or nesting components is less than or equal to the square root of the sum of the square of a vertical distance between the adjacent pair, in the extended configuration, and the square of a horizontal distance between the adjacent pair.

10. The method of claim 9, wherein each concentric or nesting component is a ring, an oval, or a polygon.

11. The method of claim 9, wherein each concentric or nesting component has a square or circular cross-section, and wherein the length of the cross-section of each concentric or nesting component is substantially identical.

12. The method of claim 9, wherein the membrane includes a composite material.

13. The method of claim 12, wherein the composite material includes a plurality of layers, each layer including one or more of BetaCloth, Kevlar™, and Multi-Layer Insulation (MLI).

14. The method of claim 9, wherein the contaminant is one or more of dust, granular material, powdered material, and particulate material.

15. The method of claim 9 further comprising providing a first flange plate attached to the first attachment point and the outermost concentric or nesting component of the plurality of concentric or nesting components and providing a second flange plate attached to the second attachment point and the innermost concentric or nesting component of the plurality of concentric or nesting components.

FIG. 1

FIG. 2A

200-2

244

206-2

$D_{O,N}$

242

$D_{O,2}$

222

240

208-3

$D_{O,1}$

206-4

206-1

h — 248

①

206-4 220

238

W — 246

②

206-3

206-1

206-2 206-3

FIG.2B

FIG. 3

FIG. 4

500

502 — | Provide a first datum plate, a movable body, and a second datum plate |

504 — | Connect a first collapsible seal to the first datum plate via a first datum flange |

506 — | Fix the first collapsible seal to the movable body via the first datum flange |

508 — | Fix a second collapsible seal to the second datum plate via a second datum flange |

510 — | Fix the second collapsible seal to the movable body via the second datum flange |

Figure 5

600

| 602 | Providing a plurality of concentric components |
|---|---|
| 604 | Providing a membrane interconnecting the plurality of concentric components |
| 606 | Providing a first flange attached to the first attachment point and an outermost component of the plurality of concentric components |
| 608 | Providing a second flange plate attached to the second attachment point and an innermost component of the plurality of concentric components |
| 610 | Providing the same length or amount of the membrane between each adjacent pair of the plurality of concentric components |

Figure 6

Europäisches
Patentamt
European
Patent Office
Office européen
des brevets

# EUROPEAN SEARCH REPORT

**Application Number**

EP 25 21 2486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 718 284 A (PFEIFFER HELMUT [DE]) 12 January 1988 (1988-01-12) * column 5, line 58 - column 6, line 30 * * figure 6 * ----- | 1-15 | INV. F16J3/04 B25J19/00 F16J15/52 |
| X | DE 32 43 220 A1 (MASCHF AUGSBURG NUERNBERG AG [DE]) 24 May 1984 (1984-05-24) * page 10, lines 12-16, 19-22,34-35 * * page 11, lines 10-11 * * figures 2-4 * ----- | 1,2,4,6, 7,9,10, 12,14 | |
| X | US 2003/067120 A1 (ARMSTRONG RICHARD JAMES [CA]) 10 April 2003 (2003-04-10) * paragraphs [0027], [0028], [0032] * * figures 1-9 * ----- | 1,2,4, 6-10,12, 14,15 | |
| X | DE 20 2007 003670 U1 (STEIN AXEL [DE]) 10 May 2007 (2007-05-10) * paragraphs [0017], [0018] * * figures 1,3 * ----- | 1-15 | |
| X | GB 2 433 252 A (DOYLE GARRY EDWARD [GB]) 20 June 2007 (2007-06-20) * page 3, lines 8-10 * * page 4, line 20 - page 5, line 4 * * figures 1-2 * ----- | 1,2,4,6, 7,9,10, 12,14 | TECHNICAL FIELDS SEARCHED (IPC) F16J B64G B25J B67C B23Q |
| X | EP 2 997 849 A1 (DART IND INC [US]) 23 March 2016 (2016-03-23) * paragraphs [0008], [0052] - [0054] * * figures 1-4 * ----- | 1,2,4,6, 7,9,10, 12,14 | |

The present search report has been drawn up for all claims

| Place of search | Date of completion of the search | Examiner |
|---|---|---|
| The Hague | 25 February 2026 | Van Wel, Oscar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 2486

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | | Publication date | Patent family member(s) | | Publication date |
|---|---|---|---|---|---|
| US 4718284 | A | 12-01-1988 | AU | 561966 B2 | 21-05-1987 |
| | | | CA | 1302983 C | 09-06-1992 |
| | | | CH | 670155 A5 | 12-05-1989 |
| | | | DE | 3514987 A1 | 30-10-1986 |
| | | | FR | 2581181 A1 | 31-10-1986 |
| | | | GB | 2174502 A | 05-11-1986 |
| | | | JP | H0529048 B2 | 28-04-1993 |
| | | | JP | S61281919 A | 12-12-1986 |
| | | | NL | 8601061 A | 17-11-1986 |
| | | | SE | 461356 B | 05-02-1990 |
| | | | US | 4718284 A | 12-01-1988 |
| | | | ZA | 862600 B | 29-07-1987 |
| DE 3243220 | A1 | 24-05-1984 | DE | 3243220 A1 | 24-05-1984 |
| | | | GB | 2131104 A | 13-06-1984 |
| US 2003067120 | A1 | 10-04-2003 | NONE | | |
| DE 202007003670 | U1 | 10-05-2007 | NONE | | |
| GB 2433252 | A | 20-06-2007 | NONE | | |
| EP 2997849 | A1 | 23-03-2016 | AR | 090734 A1 | 03-12-2014 |
| | | | AU | 2013202079 A1 | 07-11-2013 |
| | | | BR | 102013007688 A2 | 04-08-2015 |
| | | | CA | 2810347 A1 | 20-10-2013 |
| | | | CN | 103373515 A | 30-10-2013 |
| | | | EP | 2653064 A1 | 23-10-2013 |
| | | | EP | 2997849 A1 | 23-03-2016 |
| | | | HU | E039565 T2 | 28-01-2019 |
| | | | KR | 20130118814 A | 30-10-2013 |
| | | | MX | 337336 B | 25-02-2016 |
| | | | MY | 164668 A | 30-01-2018 |
| | | | PL | 2997849 T3 | 31-12-2018 |
| | | | US | 2013277364 A1 | 24-10-2013 |

EPO FORM P0459

For more details about this annex : see Official Journal of the European Patent Office, No. 12/82